# EUROPEAN PATENT APPLICATION

(11) **EP 3 076 352 A1**
(43) Date of publication of application: **05.10.2016**
(21) Application number: 15162360.0
(22) Date of filing: 02.04.2015
(51) Int. Cl.: G06Q 10/10

(54) **METHOD AND SYSTEM FOR HANDLING EXAMS**

(71) Applicant: DigiExam Solution Sweden AB, 111 60 Stockholm (SE)
(72) Inventor: Andersson, Robin, 168 44 Bromma (SE); Hägglund, Johan, 112 20 Stockholm (SE); Marefat, Nima, 172 69 Sundbyberg (SE)
(74) Representative: Bergström, Johan Erik

(57) **Abstract**

The present invention relates to a method of handling electronic exams arrange to be handled on computing devices, which computing devices have a client dedicated of handling electronic exams comprising the steps of, at the start of an exam; connecting a dedicated portable memory containing at least one exam to said computing device; the client automatically loading said at least one exam onto said computing device; the client automatically disconnecting said portable memory from said computing device, and the client locking down said computer to any access except access to the exam.

## Description

### TECHNICAL AREA

The present invention relates to a method for handling exams that students perform, and in particular exams that are performed electronically. The present invention also relates to a system for handling the method.

### BACKGROUND OF INVENTION

In all types of education, tests and exams are performed regularly in order to evaluate and measure the knowledge level of the students. Traditionally, tests and exams have been presented in paper form and the students use paper and pen when answering the questions of the tests.

However, tests or exams that are produced on paper and performed on paper have a number of drawbacks. If there are a lot of students that are taking the exam, a large amount of examination papers have to be printed, handed out for the exam, collected after the exam, corrected, graded and then redistributed, providing an inefficient handling of the physical exams.

Further, many students are nowadays not used to write with pens on physical paper which leads to cramps in the hands during exam and often rather bad handwriting. These factors can adversely affect the grading of the exams if the answers are hard or even not possible to read. Students are instead used to work with computers and to write with the help of keyboards.

Some solutions for digital tests or exams have been developed during recent years. A main aspect or concern is how to minimize or prevent the students from cheating. This is an important aspect since computers can store a lot of information and computers may be connected to external sources of information via networks. In order to prevent cheating it is then critical that no surplus information may be available to the students, which otherwise would jeopardize the validity of the exam results. Some solutions presented then use computers that are "clean", i.e. do not contain any stored information. These computers are only used for exams, which is a drawback from an economical point of view, especially since many schools already provide their students with computers.

Some developers have provided solutions where the students can use their own computers. In order to be able to do an exam, the students are requested to download the exam questions from the Internet prior to the exam. However, the exams are not available until a certain unlocking code is provided, which is done at the start of the exam. When unlocking the exam and answering the exam questions, the computer should be in a locked down mode and the exam program will only provide controlled access to any files or applications on the computer. When the exam period is ended, the exam is blocked and the lock down of the computer is removed. The exam program will store the exam answers and the student will then upload it in the exam hall or go home and upload the exams to dedicated databases.

A major drawback with that kind of solution is the situation if an active Internet connection fails when the exam is finished and the answers should be uploaded. This could be due to a number of reasons such as heavy load on local internet nodes (many computers trying to connect to the same router for instance), power shortage, internet supplier problems etc. Another problem when uploading from home could be that problems with the suppliers' databases may cause problems for the students to upload their answers. If this fails the assessing part will never know if the supplier caused the problem or if it was the student itself that failed to upload the answers in the acceptable time given. This kind of risks is a relevant and crucial problem that causes large distress for students' not knowing if their exam will be graded or not, especially in high stake scenarios such as bar exams or entrance exams where students futures are on the line.

If such a scenario would occur, then there is a great risk that important exam information from individuals or even larger groups of students is not uploaded, either at all or partly or being very delayed. This risk of missing, corrupt or even manipulated exam answers resulting from a failing or very slow online connection could be devastating for the faith/trust of electronic/digital exam solutions.

There is further a drawback in that the students have to download the exams beforehand. If they fail to do so for various reasons, for example due to failing Internet connections, then those students cannot perform the exam.

### BRIEF DESCRIPTION OF INVENTION

In the following description of the invention, reference will be made to computers and computing devices. It is to be understood that these comprise any type of device that is provided with at least one processor capable of handling computer code and other digital data in order to perform different computing tasks. It is thus to be understood that they embrace stationary computers, laptops, tablets, smart phones, etc. the list not being exhaustive.

The wording client is used in connection with the present invention. In this context it is to be understood that the client comprises a computer program or programs containing computer program code that, when run on a computing device as described above, is capable of performing a number of tasks and operations, including communication with external computing devices such as servers. However, the client according to the present invention is not dependent on the interaction with an external server for performing tasks and operations, but may perform any data processing operations itself.

Further, the wording lock down or locking down is used when describing the invention. It is to be understood that the wording comprises the function of limiting the user's access of the functions and programs of the computing device to specific, dedicated, predetermined programs and functions only. The computing device may for the rest be able to perform functions, run programs and communicate with appropriate internal and/or external databases and information sources, however without the influence or control of the user.

The aim of the present invention is to remedy the drawbacks of the state of the art solutions. This aim is solved by the features of the independent patent claims. Preferable embodiments form the subject of the dependent claims.

According to the present invention, it relates to a method of handling electronic exams arranged to be handled on computing devices. The computing devices should have a client installed, dedicated of handling electronic exams. The method may comprise the steps of, at the start of an exam, connecting a dedicated portable memory containing at least one exam to said computing device. When connected, the client may automatically load at least one exam onto said computing device.

This has the advantage that there are no handling steps from either a student or a supervisor of the exam, it is handled by the client. A further advantage is that the client will automatically disconnect the portable memory from said computing device, again without the action from any persons involved. Further, the client may preferably lock down the computer to any access for the student except access to the exam. In this way, the only actions that the student may take are to work on the exam or quit the exam. No other functions, programs or features are available to the student during the exam.

The method according to the invention may further comprise the steps of, at the end of an exam, the client locking down the exam answers, whereby they are no longer available to the student. A dedicated portable memory may then be connected to the computing device, whereby the client automatically loading said exam answers onto said dedicate portable memory. As with the beginning of the exam the client automatically disconnecting said portable memory from said computing device. Again, the loading of the exam onto the portable memory as well as the disconnection is performed automatically without any involvement of students or supervisors.

Advantageously the method also comprises the steps of regularly storing exam answers on dedicated local storage space of said computer during the exam. In this way it is ensured that no data or answers can be missing as may be the case if all the exam answers were stored at the end of the exam period. Further, the method may comprise the steps of checking if an external network is available to the computer, and when so, connecting the computer to the external network, and regularly storing exam answers on dedicated external storage space on said external network. With this additional solution, exam answers are stored in multiple places, further reducing the risk that exam results become missing, as could be the case if e.g. the internal memory storage of the computer would become corrupt or damaged. According to a favourable solution, the external network may comprise the Internet. The invention may also include computer programs and computer program code for executing the method.

These and other aspects of, and advantages with, the present invention will become apparent from the following detailed description of the invention and from the accompanying drawings.

### BRIEF DESCRIPTION OF DRAWINGS

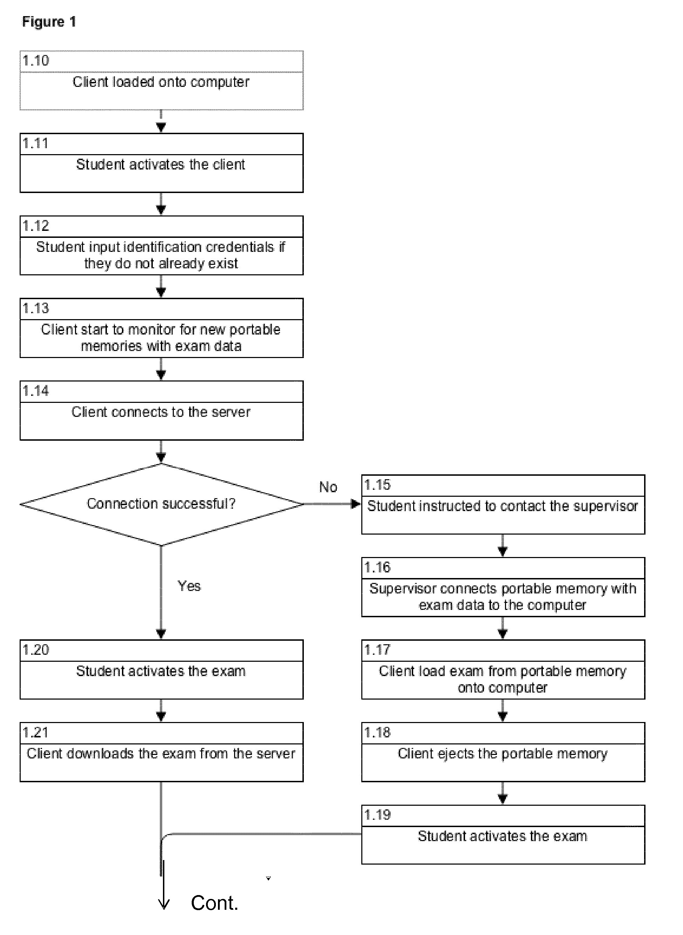

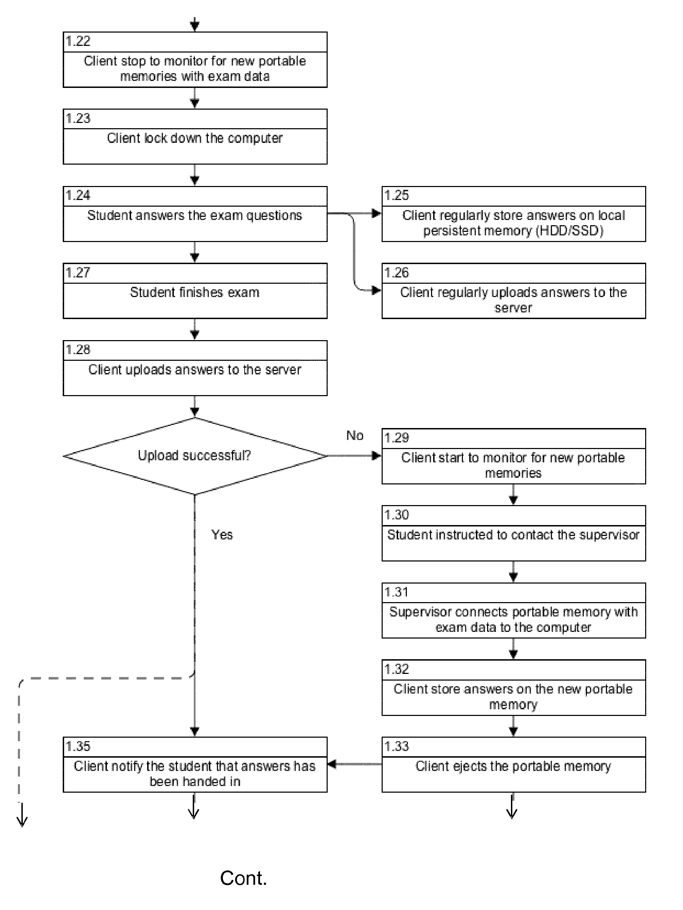

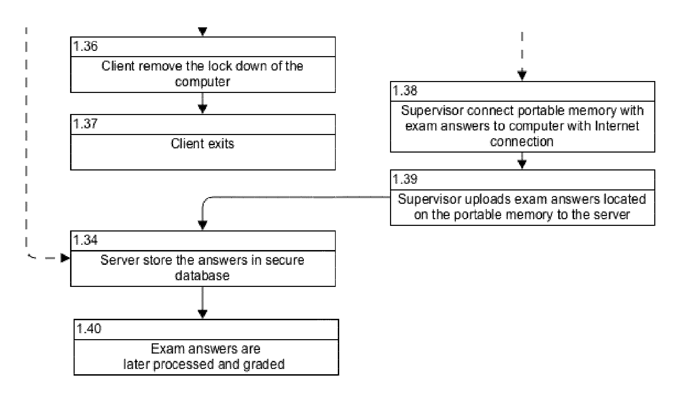

In the following detailed description of the invention, reference will be made to the accompanying drawings, of which
- Fig. 1: is a flowchart showing the method of the present invention.

### DETAILED DESCRIPTION OF THE INVENTION

The invention according to the present invention comprises a solution wherein each student/candidate that is to do an exam/test may bring their own computer or may use a computer provided by the exam organiser, such as a school. With the present invention, it is not important where the computer comes from, and students, for example being given one when they sign up for an education, may use it, regardless of what information and data the computer is stored with. Also there is no risk for the student worrying if their exam file is handed in the proper way or not when they leave the examination hall.

The invention will be described in connection with the flowchart of Figure. 1. The students have beforehand loaded the computer with a specific client, 1.10, comprising a number of functions as will be described. Alternatively, if a school or organisation is providing computers, then they can have loaded the client on each computer before handed over to the students. When an exam is to begin, normally a communications network is available. The students are then requested to activate the client, 1.11.

The client will connect to an external database comprising exams, which may be located on the Internet, 1.14. The client will then retrieve the exams available to a certain user. In that respect, the client may have identification data of the specific user beforehand, for instance when the client was loaded initially, 1.10. Alternatively, the user has to identify himself/herself when the client is activated, 1.12.

The client will present the exam or exams available to the students. The link between the student and exam can be done by a participant list or by using an exam code that links the student to the exam. When the students select a specific exam, the exam questions are automatically downloaded by the client from a dedicated server comprising the exam.

Should the communication network connection fail when the exam is to begin, then the present invention has a solution to handle such a situation, because an exam performed on computers should not be dependent upon communication network connections at the time of exam either at the start, during or at the finish of the exam. Because of this, the program handling the exam as well as the exam itself, is provided on a portable storage source. Thus, if the network does not work, this is detected by the client trying to download the exam. The client will then instruct the student, 1.15, by e.g. a message on the screen and/or audible information that he/she should contact the supervisor responsible for and present at the exam site.

The supervisor will then have a portable memory that is connectable to the computers. He will attach the portable memory to each computer, 1.16. The client is then programmed to detect the portable memory and its content and will automatically load the exam onto the computer, 1.17. After the loading of the exam, the client will automatically eject the portable memory from the computer, 1.18, so that it may be removed by the person responsible without the need for any interaction neither from the student nor from the person responsible. This procedure is repeated for each computer that is to be used during the exam.

There are many types of portable memory sources available on the market that could be used that are known to the skilled person such as e.g. memory cards (SD-cards), CD-rom/DVD disks, SSD hard drives, just to mention a few, but presently the most favourable is the so called USB drives.

The advantages with the USB drives are that they are very compact, can contain a lot of information and are easy to handle even for persons that are not so technically experienced. In a favourable solution, the person or persons supervising an exam are given a portable memory, e.g. a USB drive, before the exam event. When the exam is to begin, and if the students are suffering a loss of communication networks connection, then the supervising personnel can start the exam with their portable memory. The portable memory is then connected to each of the student's computers via an appropriate I/O port, e.g. a USB port.

Thus as mentioned, the program handling the exam is programmed such that when the portable memory is connected, the exam is loaded onto the computer and started automatically. That is, neither the supervising personnel nor the student have to perform any handling steps in order to have the exam up and running on the individual computers. This is an important aspect of the present invention because many of the persons that are brought in to supervise exams, in fact including many teachers, are not very technically adept to computers and computer programs. Thus, it is important that the human interaction for starting an exam "off-line" is kept to a minimum. If users decide to have multiple exams on the portable device a list of all exams will appear and the student has to choose the relevant exam.

When the exam questions are uploaded, either from an external database or from the removable memory, the student can choose to start the exam, 1.19 or 1.20. The computer then becomes locked down in the sense that it is only the program handling the exam that is accessible, 1.23. That is, once the exam and its program is running, it cannot be interrupted or left without it being recorded such that it is impossible to go back. The only option is then to do the operation of "handing in" the exam. Thus, the students cannot leave the program handling the exam during the examination period. On the other hand, the computer may perform a number of tasks in the background that the user cannot affect and/or does not know about. If there is a communication network available to the computer, it will be connected to it, for instance in order to perform the following.

During the exam period, the answers of the students are stored locally on the hard drives of the computers the students are using as well as being uploaded regularly during the course of the exam, 1.26, via the communication networks to dedicated servers and databases in order to ensure that the answers from the students are stored safely. These uploads are performed without the action of the students. Should a connection temporarily fail, then the program will store answer data locally on the hard drive of the specific computer that the student is using, 1.25, which storage location is not known to the student and cannot be accessible after the exam. When the connection is restored, the answer data is transmitted via the communication networks to the dedicated servers. There is thus a safety in that the answers from the students are stored both on the computers as well as on external databases. Should the external connection fail, which is fairly common due to bad wifis, then the answers are always safe on the local computers.

When the student has finished the exam, 1.27, the client is activated again and the client connects to the communication network, 1.28. The exam results will then be uploaded, 1.28, to an external dedicated and safe database for later grading. The client also removes the lock down of the computer. However, if the communications network is not available at the end of the exam, then the client will see to that the exam is locked and is not accessible. The student is alerted that no communication network is available, 1.30 and that a supervisor should be contacted. The supervisor will then connect the portable memory to the computer, 1.31. This connection is detected by the client, whereby the finished exam is loaded onto the portable memory and saved, 1.32. As previously, after completed saving of the exam results, the client will automatically eject the portable memory without any interaction from the student or the supervisor. This operation is performed for all computers attending the exam that are unable to upload their answer data to the servers over the communication network. When the supervisor has collected all of the offline exams, they are uploaded from a computer, preferably a dedicated computer that the supervisor uses,1.39, to a server where they are stored for later processing, such as grading, 1.40. The uploading may be performed with just one click for all collected exam answer data.

According to one important aspect, the client will only load and save a finished exam when a new device is inserted in the computer. So even if a student has a SD-card or a personal USB in the computer during the exam the client will not react to it.

It is to be understood that the embodiments described above and shown in the drawings are to be regarded as only non-limiting examples of the invention and that it may be modified in many ways within the scope of the patent claims.

## Claims

1. Method of handling electronic exams arrange to be handled on computing devices, which computing devices have a client dedicated of handling electronic exams comprising the steps of, at the start of an exam:
- connecting a dedicated portable memory containing at least one exam to said computing device,
- the client automatically loading said at least one exam onto said computing device,
- the client automatically disconnecting said portable memory from said computing device, and
- the client locking down said computer to any access except access to the exam.

2. Method according to claim 1, further comprising the steps of, at the end of an exam:
- the client locking down the exam answers;
- connecting a dedicated portable memory to said computing device,
- the client automatically loading said exam answers onto said dedicate portable memory, and
- the client automatically disconnecting said portable memory from said computing device.

3. Method according to claim 1 or 2, further comprising the steps of:
- regularly storing exam answers on dedicated local storage space of said computer during the exam.

4. Method according to any of the preceding claims, further comprising the steps of:
- checking if an external network is available to the computer;
- when so, connecting the computer to the external network, and
- regularly storing exam answers on dedicated external storage space on said external network.

5. Method according to claim 4, wherein said external network comprises the Internet.

6. Computer program comprising a program code for performing the method steps of claims 1-5, when said computer program is run on a computer.

7. Computer program product comprising a program code stored on a media, readable by a computer for performing the method steps of claim 1-5, when computer program is run on the computer.

8. Computer program product according to claim 7, wherein the media may comprise HDD's SSD's, memory cards (SD-cards), CD-rom/DVD disks, USB drives.
